# EUROPÄISCHE PATENTSCHRIFT

(11) **EP 0 486 941 B1**
(45) Veröffentlichungstag und Bekanntmachung des Hinweises auf die Patenterteilung: **12.10.1994**
(21) Anmeldenummer: 91119409.0
(22) Anmeldetag: 14.11.1991
(51) Int. Cl.: F16L 27/12, F16L 47/00

(54) **Kompensator für Leitungen oder dergleichen**
Compensator for pipes or the like
Compensateur pour conduites ou similaires

(30) Priorität: 23.11.1990 DE 4037279
(43) Veröffentlichungstag der Anmeldung: 27.05.1992
(73) Patentinhaber: Friatec Aktiengesellschaft Keramik- und Kunststoffwerke, D-68229 Mannheim (DE)
(72) Erfinder: Bläss, Jürgen, W-6805 Heddesheim (DE)
(74) Vertreter: Klose, Hans, Dipl.-Phys.

(56) Entgegenhaltungen:
- BE-A- 550 676
- DE-A- 2 152 083
- FR-A- 1 559 983
- US-A- 3 427 051
- US-A- 4 687 232

## Beschreibung

Die Erfindung bezieht sich auf einen Kompensator zur Aufnahme von Längenänderungen in einer Rohrleitung gemäß den im Oberbegriff des Patentanspruchs 1 angegebenen Merkmalen.

Aus der FR-A-1 559 983 ist ein derartiger Kompensator bekannt, dessen Kern und Kolben mit jeweils zwei Kunststoffrohren der Rohrleitung verbunden sind und gleichfalls aus Kunststoff bestehen, wobei mit dem Kern eine Hülse verbunden ist. Zwischen der Hülse und dem Kern ist eine Ringkammer vorhanden, in welcher der Kolben zumindest teilweise hineinragt. Im Hinblick auf den Temperatur-Koeffizienten von Kunststoff müssen vergleichsweise große Wanddicken vorgegeben werden, damit die Funktionsfähigkeit des Kompensators auch bei erhöhten Temperaturen der in der Rohrleitung strömenden Flüssigkeit sichergestellt ist. Infolgedessen sind ein nicht unerheblicher Materialeinsatz und ein entsprechendes Gesamtgewicht erforderlich. Desweiteren ist ein relativ großer Außendurchmesser erforderlich, welcher vor allem beim Verlegen der Rohrleitung im Mauerwerk und/oder unter Putz bzw. Verkleidungen recht nachteilig ist.

Ferner ist aus der US-A-3 427 051 ein aus Metall bestehender Kompensator für metallische Druckrohrleitungen bekannt, welche insbesondere für Hydraulikflüssigkeiten vorgesehen sind. An den beiden Enden enthält der Kompensator zur Aufnahme von Drehbewegungen je ein Kugelgelenk und zusätzliche Verbindungsteile für die Rohrleitung. Der Kompensator ist von einer flexiblen Manschette umgeben, um das Austreten von Hydraulikflüssigkeit zu verhindern. Aufgrund der unterschiedlich großen Temperatur-Koeffizienten von Kunststoff einerseits und Metall andererseits kann ein derartiger Kompensator in Kunststoffrohrleitungen nur zusammen mit speziellen Übergangsstücken von Kunststoff auf Metall zum Einsatz gelangen, wodurch die gesamte Baulänge entsprechend vergrößert würde.

Rohrleitungen aus Kunststoff, genannt seien hier insbesondere chloriertes Polyvinylchlorid oder Polyethylen, gelangen heute in zunehmendem Maße in der Installationstechnik zur Wasserversorgung in Gebäuden zum Einsatz. Aufgrund des im Vergleich zu Metallrohrleitungen erhöhten Temperaturkoeffizienten von Kunststoffrohren sind besondere Maßnahmen zum Ausgleich von Längenänderungen infolge von Temperaturänderungen des in der Rohrleitung geführten Wassers, und zwar insbesondere bei der Warmwasserversorgung in Form von Frischwasser oder Heizungswasser, ebenso notwendig wie infolge von Temperaturänderungen der Umgebung. Bisher mußten regelmäßig beim Verlegen von Kunststoffrohrleitungen sehr sorgfältig Fixpunkte sowie Ausdehnungsbögen angeordnet werden, wodurch ein erheblicher Montageaufwand bedingt war. Ferner gelangten zur Längskompensation oftmals Gummikompensatoren mit nachgiebigen Teilen aus einem elastomeren Werkstoff oder besondere Dehnungsmuffen zum Einsatz. Die Montage ist besonders sorgfältig durchzuführen, damit die im Betrieb zu erwartenden Längenänderungen der Rohrleitung aufgenommen werden können. Darüber hinaus sind besondere Maßnahmen notwendig, wenn in den Rohrleitungen Druckstöße infolge von schnellschließenden Absperrorganen, wie Einhebelmischer, Kugelhähne oder dergleichen auftreten. In derartigen Druckrohrleitungen können beim Schließen Druckstöße kurzzeitig auf über 60 bar ansteigen. Die dadurch auftretende Axialkraft führt zu einer Beanspruchung der Rohrleitung und sämtlicher Verbindungen auf "Zug". So ist beispielsweise bei einem in der Praxis als realistisch geltenden Druckstoß von 60 bar bei einem Rohrdurchmesser von DN 25 mit einer Zugkraft von 2800 N oder bei einem Rohrdurchmesser von DN 50 mit einer Zugkraft von 10000 N zu rechnen. Gelangen Kompensatoren zum Einsatz, welche diese Axialkräfte nicht aufnehmen können und/oder bei denen ein Rohrende beispielsweise in eine Muffe nur eingesteckt ist, so werden die Zugkräfte von den Rohren auf den nächstliegenden Festpunkt bzw. die nächstliegende feste Rohrschelle übertragen. Rohrschellen können jedoch Längskräfte nur bedingt aufnehmen, weil entweder eine zwischen Rohr und Rohrschelle vorhandene

Gummieinlage herausgedrückt wird oder aber sich die Befestigung zwischen der Wand und der Schelle lösen kann. Desweiteren ist vor allem bei Rohrleitungen von kleineren Durchmessern und flexibler Ausgestaltung eine Auslenkung zwischen den Schellen zu befürchten. Zudem ist zu beachten, daß sich derartige Druckstöße in Rohrleitungen mehrmals täglich wiederholen können und die daraus resultierenden Schwellbeanspruchungen im Laufe der Zeit von den Schellen nicht mehr aufgenommen werden können und das in den Kompensator eingesteckte Rohrende herausgedrückt wird bzw. der Kompensator auf "Endlage" fährt.

Hiervon ausgehend liegt der Erfindung die Aufgabe zugrunde, einen Kompensator der genannten Art, insbesondere für den Einsatz in Druckrohrleitungen, dahingehend weiterzubilden, daß eine hohe Betriebssicherheit für eine lange Zeit gewährleistet wird und ein geringes Bauvolumen mit geringem Fertigungsaufwand erreicht wird.

Diese Aufgabe wird gemäß den im Kennzeichen des Patentanspruchs 1 angegebenen Merkmalen gelöst.

Der erfindungsgemäße Kompensator zeichnet sich durch einen funktionsgerechten Aufbau und eine sichere Funktionsweise aus. Der Kern und der bewegliche Kolben sind jeweils unmittelbar mit einem Ende der Rohrleitung verbunden und ermöglichen axiale Relativbewegungen. Der bewegliche Kolben umgibt den Kern und ist entlang der Außenfläche desselben axial verschiebbar, wobei mittels Dichtringen eine Abdichtung erfolgt. Durch die Ummantelung der Hülse mit einem Mantel aus Metall wird bei geringem Bauvolumen den Sicherheitsanforderungen zuverlässig entsprochen. Selbst bei vergleichsweise hohen Temperaturen wird eine erhöhte Nachgiebigkeit des Kunststoffes von dem Metallmantel sicher aufgenommen, so daß die Dichtfunktion im Inneren des Kompensators zwischen dem Kolben und dem Kern mittels den dort vorgesehenen Dichtringen gewährleistet werden kann. Durch die Integration der Anschlußelemente für die Rohrleitung unmittelbar in den Kern bzw. den Kolben wird auch in axialer Richtung eine kurze Baulänge gewährleistet, wobei zusätzliche Verbindungselemente, Übergangsstücke oder dergleichen nicht erforderlich sind. Die Anschlußelemente sind zweckmäßig als Muffen ausgebildet, in welche die jeweiligen Enden der Rohrleitung eingesetzt sind, wobei insbesondere durch Kleben eine dauerhafte und dichte Verbindung sichergestellt wird. Die Anschlußelemente sind direkt in das jeweilige freie Ende des Kernes bzw. des Kolbens integriert, so daß eine stabile und funktionssichere Verbindung erreicht wird. Durch die Ausbildung des Anschlußelements des Kolbens als eine innenliegende Muffe wird ermöglicht, daß radial außen die Außenfläche des Kolbens auch im Bereich des Anschlußelements als Führungs- oder Schiebefläche für die Hülse und deren Dichtung genutzt werden kann; dies erweist sich vorteilhaft im Hinblick auf die Baulänge des Kompensators. Aufgrund der Ummantelung der Hülse mit einem zylindrischen Mantel aus Metall kann die Wandstärke der radial innenliegenden Kunststoffhülse vergleichsweise gering ausgebildet sein; dies ist günstig hinsichtlich des Außendurchmessers ebenso wie hinsichtlich des erforderlichen Materialeinsatzes und Gewichtes.

In einer besonderen Ausgestaltung weist der Kern einen Innendurchmesser auf, welcher im wesentlichen gleich groß ist wie der Innendurchmesser des anzuschließenden Rohres der Rohrleitung. Querschnittsänderungen, und zwar insbesondere Querschnittsminderungen, welche strömungstechnisch sehr ungünstig sind, werden ebenso vermieden wie Wirbelbildung und hieraus resultierende Strömungsgeräusche. Des weiteren wird auch der Kolben in den anzuschließenden Rohrenden im nachfolgenden Bereich in zweckmäßiger Weise mit dem gleichen Durchmesser versehen wie der Rohrinnendurchmesser. Insgesamt wird durch die Abstimmung der genannten Innendurchmesser des Kompensator auf den Innendurchmesser der anzuschließenden Rohre sichergestellt, daß die Entstehung von Verwirbelungen und/oder Strömungsgeräuschen im wesentlichen unterbunden werden.

Der bewegliche Kolben weist einen Flansch auf, dessen Rückwand über wenigstens eine Durchgangsöffnung mit dem Inneren der Rohrleitung in Verbindung steht. Die Rückwand ist Bestandteil einer Ringkammer, in welcher der in der Rohrleitung vorherrschende Druck ansteht. Über die Rückwand wirkt auf den beweglichen Kolben somit eine Axialkraft, welche der Zugkraft infolge des Drucks bzw. der Druckstöße im Inneren der Rohrleitung entgegengerichtet ist. Die Fläche der Rückwand wird in der Weise vorgegeben, daß auch unter Berücksichtigung von Reibungskräften ein Gleichgewicht mit der axialen Zugkraft erreicht wird. Die Fläche der Rückwand ist wenigstens gleich oder größer als die Innenfläche des beweglichen Kolbens. Eine mit dem Kern fest verbundene Hülse umgibt jenen sowie den beweglichen Kolben, wobei dessen Flansch entlang der Innenfläche der Hülse verschiebbar ist, wobei mittels Dichtringen eine Abdichtung der genannten Kammer erreicht wird. Der Hub des Kolbens kann problemlos sehr groß vorgegeben werden. Bei Druckaufbau wirken entstehende Axialkräfte an der Rückwand sowie der Innenfläche gegeneinander und heben sich entsprechend der Flächenvorgabe auf, sodaß der Kompensator immer im Gleichgewicht ist und Längenänderungen ungehindert aufnehmen kann. Ferner wird bei geschlossenen Systemen das verdrängte Flüssigkeitsvolumen beim Zusammenfahren in der genannten Kammer aufgenommen, wodurch insoweit möglichen Druckerhöhungen vorgebeugt wird. Für den Längenkompensator ist kein spezieller Festpunkt erforderlich und es genügt eine normale Schelle. Ferner sind keine Besonderheiten bei der Verlegung der Rohrleitung zu beachten und die Gefahr von diesbezüglichen Montagefehlern wird vermieden.

In einer wesentlichen Ausgestaltung gelangen Dichtringe zum Einsatz, welche eine Lecküberwachung ermöglichen. Diese Dichtringe weisen wenigstens eine Kammer auf, welche über Bohrungen oder dergleichen nach außen derart geführt sind, daß die Lecküberwachung ermöglicht wird. Diese Kammer liegt in Druckrichtung hinter wenigstens einer Dichtlippe und enthält bei ordnungsgemäßer Funktion der Dichtlippe keine Flüssigkeit. Genügt die vorgeschaltete Dichtlippe bzw. genügen die vorgeschalteten Dichtlippen nicht mehr den Anforderungen, so kann Flüssigkeit in die genannte Kammer und damit zur Leckanzeige über die genannten Bohrungen oder dergleichen gelangen.

Weitere wesentliche Ausgestaltungen und Besonderheiten sind in den Unteransprüchen angegeben.

Die Erfindung wird nachfolgend an Hand der in der Zeichnung dargestellten Ausführungsbeispiele näher erläutert. Es zeigen:
- Fig. 1: einen axialen Längsschnitt des Kompensators,
- Fig. 2: vergrößert einen Schnitt durch den Dichtring.

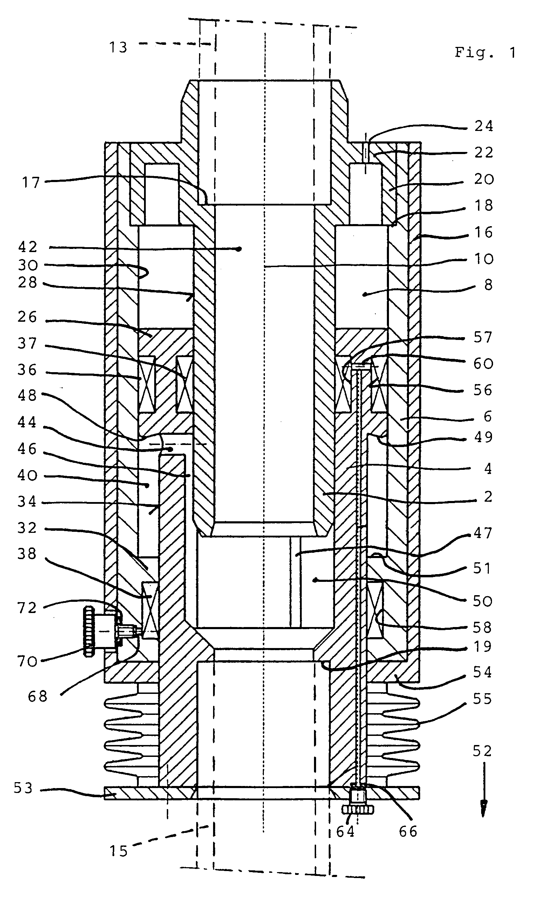

Gemäß Fig. 1 enthält der Kompensator einen Kern 2, einen Kolben 4 sowie einen Hülse 6. Von diesen drei wesentlichen Bestandteilen sind der Kern 2 und der Hülse 6 fest miteinander unter Bildung einer Ringkammer 8 verbunden, in welcher der Kolben 4 in Richtung einer Längsachse 10 relativ zu jenen axial verschiebbar angeordnet ist. Der Kern 2 und der Kolben 4 enthalten an den axialen Enden des Kompensators je eine Muffe 12, 14, in welchen Enden von hier gestrichelt eingezeichneten Rohren 13, 15 der Rohrleitung insbesondere über Klebeverbindungen dicht und fest verbindbar sind. Die Muffen 12, 14 bilden die in dem Kern 2 bzw. dem Kolben 4 integrierten Anschlußelemente für die Rohrleitung, wobei eine unmittelbare Verbindung auf kürzestem Wege, geringer Baulänge und ohne zusätzliche Bauteile erreicht wird. Die Anordnung der Anschlußelemente im wesentlichen innerhalb des Kernes 2 und/oder des Kolbens 4 erweist sich besonders günstig im Hinblick auf das Bauvolumen und insbesondere die Baulänge des Kompensators. Dies gilt vor allem im Hinblick auf die Muffe 14 des Kolbens 4, dessen Außenfläche auch im Bereich der Muffe 14 von der Hülse 6 überfahren werden kann. Anstelle der Klebeverbindung kann alternativ auch eine Schraubverbindung in den Muffen 12, 14 für den direkten Anschluß der Rohre 13, 15 ausgebildet sein. Gegebenenfalls können im Rahmen dieser Erfindung auch andere Verbindungsvorrichtungen und Elemente an den axialen Enden des Kernes 2 bzw. des Kolbens 4 vorgesehen sein. Die Länge der Ringkammer 8 in Richtung der Längsachse 10 und damit der Hub des Kolbens 4 wird entsprechend den zu erwartenden Längenänderungen der Rohrleitung vorgegeben, wobei zuverlässig ein großer Hub ermöglicht wird. Der Hub ist erfindungsgemäß um einen Faktor größer als die Nennweite der Rohrleitung, wobei dieser Faktor wenigstens den Wert 2 aufweist. Die Muffen 12, 14 reichen axial nach innen bis jeweils zu einem Ringbund 17, 19. Diese Ringbunde 17, 19 bilden Anschläge beim Einführen der Rohre 13, 15. Insbesondere durch den Ringbund 19 der Muffe 14 wird vermieden, daß das Rohr 15 zu weit eingeführt wird, wodurch die freie Bewegbarkeit und letztendlich die Funktion des Kompensators zumindest erheblich eingeschränkt wäre. Die Ringbunde weisen in radialer Richtung gemessen eine Höhe auf, welche im Rahmen dieser Erfindung im wesentlichen gleich groß ist wie die Wanddicke der Rohre 13, 15. Dies ist sehr günstig im Hinblick auf eine möglichst wirbelfreie Strömungsführung des Mediums im Kompensator.

Der Kern 2, der Kolben 4 und die Hülse 6 sind dem durch die Rohrleitung strömenden Medium, insbesondere unter Druck stehendem Wasser, ausgesetzt und werden in zweckmäßiger Weise im Spritzgießverfahren gefertigt. Die Hülse 6 ist radial außen von einem Mantel 16 umgeben, welcher aus Metall, insbesondere Aluminium, besteht. Der Mantel 16 nimmt zuverlässig die Druckkräfte auf und die aus Kunststoff bestehende Hülse 6 kann vergleichsweise dünnwandig ausgebildet sein; ohne den Mantel 16 müßte die Hülse 6 eine beträchtliche Wanddicke aufweisen, wodurch einerseits der Außendurchmesser des Kompensators unerträglich groß würde und, abgesehen von Fertigungsschwierigkeiten, bei dickwandiger Ausführung das Gesamtgewicht des Kompensators wesentlich größer würde. Die Hülse 6 weist zur axialen Festlegung des Kernes 2 an der Innenseite eine radiale Ausnehmung mit einer Ringschulter 18 auf, bezüglich welcher ein Ring 20 des Kernes 2 definiert ausgerichtet und befestigt ist. Die Ringschulter 18 dient als Anschlag bei der Montage und dem bevorzugten Einkleben des Kernes 2 mit der Hülse 6. Der Ring 20 ist über einen radialen Steg 22, welcher eine Entlüftungsbohrung 24 aufweist, im Bereich der Muffe 12 angeordnet und als integraler Bestandteil des Kernes 2 ausgebildet.

Der Kolben 4 enthält im Bereich der Ringkammer 8 einen radial nach außen weisenden, ringförmigen Ansatz oder Flansch 26, der einerseits an der Außenfläche 28 des Kernes 2 und andererseits an der Innenfläche 30 mit einem hinreichenden Spiel anliegt, um eine axiale Relativbewegung weitgehend unbehindert zu ermöglichen. Schließlich enthält die Hülse 6 einen radial nach innen gerichteten Ansatz 32, welcher wiederum mit entsprechendem Spiel an der Außenfläche 34 des Kolbens 4 anliegt. Wie ersichtlich, sind im Flansch 26 und im Ansatz 32 insgesamt drei Dichtringe 36, 37, 38 vorgesehen, welche eine zuverlässige Abdichtung zwischen den gegeneinander bewegbaren Flächen gewährleisten. Zwischen dem radial nach außen gerichteten Flansch 26 und dem radial nach innen gerichteten Ansatz 32 ist eine ringförmige Kammer 40 vorhanden, deren axiale Länge entsprechend der jeweiligen Stellung des Kolbens 4 gegenüber dem Kern 2 und der Hülse 6 vorgegeben ist. Wesentlich ist, daß zwischen der Kammer 40 und dem vom Medium beaufschlagten Innenraum 42 eine Verbindung besteht. Hierzu weist der Kolben 4 wenigstens eine durchgehende radiale Bohrung 44 sowie eine Verbindungsnut 46 im Bereich der Innenfläche auf. Zweckmäßig sind mehrere derartige Bohrungen und Verbindungsnuten über den Umfang verteilt vorgesehen, wobei hier eine zweite Verbindungsnut 47 zu erkennen ist. Mehrere Verbindungsnuten erhöhen die Sicherheit im Hinblick auf die Gefahr des Zusetzens durch Verunreinigungen. Ferner kann die radiale Tiefe der einzelnen Verbindungsnuten entsprechend klein vorgegeben werden, sodaß auch die radiale Wanddicke des Kolbens 4 kleingehalten werden kann.

Die Durchgangsbohrung 44 mündet in zweckmäßiger Weise unmittelbar im Bereich der Rückwand 48 des Flansches 26 in die Kammer 40, damit auch in der ausgefahrenen Endstellung des Kolbens 4 der Innendruck in der Kammer 40 wirksam ist. Die Rückwand 48 liegt nicht exakt in einer Radialebene, sondern weist zumindest teilweise konisch geneigte oder abgeschrägte Abstandselemente 49 auf, um ein "Festkleben" an dem Ansatz 32 nach Erreichen der ausgefahrenen Endposition zu vermeiden. Alternativ kann die Rückwand ferner axiale Noppen, Stege oder dergleichen als Abstandselemente aufweisen. Ferner kann zusätzlich oder alternativ die Stirnwand 51, welche die Kammer 40 am anderen axialen Ende begrenzt, entsprechende Abstandselemente aufweisen. Schließlich können die Abstandselemente, sei es der Rückwand 48 oder der Stirnwand 51, auch als dort vorhandene Nuten ausgebildet sein, welche den Druckaufbau zumindest teilweise auch dann ermöglichen, wenn in der ausgefahrenen Endstellung die Rückwand 48 an der Stirnwand 51 anliegt.

Die Ringfläche der Rückwand 48 ist wenigstens gleich, zweckmäßig um die Reibkräfte der Dichtungen größer als die Querschnittsfläche 50 im Inneren des Kolbens 4. Ein in der Rohrleitung wirksamer Druck bzw. Druckstoß bewirkt grundsätzlich eine Kraftkomponente derart, daß der Kolben 4 in Richtung des Pfeiles 52 vom Kern 2 weggezogen wird. Da der Druck erfindungsgemäß auch in der Kammer 40 wirksam ist, wirkt auf die Rückwand 48 eine entgegengerichtete Kraftkomponente. Da die Ringfläche der Rückwand 48 im wesentlichen gleich groß wie die Querschnittsfläche 50 ist, wird ein Kräftegleichgewicht hergestellt und eine Relativbewegung in Richtung des Pfeiles 52 unterbunden. Auch bei einem plötzlichen Druckanstieg fährt der Kompensator nicht in die ausgefahrene Endstellung und Längenänderungen der Rohrleitung werden unabhängig von dem Innendruck funktionssicher aufgenommen. Die Flächen werden erfindungsgemäß derart vorgegeben und angeordnet, daß die angeschlossenen Rohre an den Kompensator herangezogen werden und somit nicht ausknicken können. Zwischen dem axialen Ende der Hülse 6 bzw. dem Boden 54 des zylindrischen Mantels 16 aus Metall und dem freien Ende des Kolbens 4 ist ein Balg 55 aus einem elastomeren Werkstoff, beispielsweise Gummi, zum Schutz der Außenfläche des Kolbens 4 gegen Verschmutzungen angeordnet. Der Balg 55 ist zwischen dem Boden 54 des Metallmantels 16 und einer Endplatte 53 angeordnet. In zweckmäßiger Weise ist der Außendurchmesser des Balgs 55 im wesentlichen gleich, zumindest aber nicht wesentlich größer als der Außendurchmesser des Mantels 16 und ist folglich gegen äußere Einwirkungen gut geschützt.

Die bereits erwähnten Dichtringe 36 bis 38 sind in Ringnuten 56, 57, 58 des Kolbens 4 bzw. der Hülse 6 angeordnet. An der abgewandten Seite der vom Druck beaufschlagten Kammer 40 sind die beiden Ringnuten 56, 57 des Kolbens 4 mit einer radialen Durchgangsbohrung 60 miteinander verbunden, in welche eine axiale Bohrung 62 mündet. Diese axiale Bohrung 62 ist am freien Ende des Kolbens 4 mittels einer Rändelschraube 64 und einem Dichtring 66 abgeschlossen. Wie nachfolgend noch zu beschreiben ist, sind die Dichtringe 36, 37 derart ausgebildet, daß bei ordnungsgemäßer Funktion keine Flüssigkeit aus dem Innenraum 42 oder der Kammer 40 nach außen entweichen kann. Werden die Dichtringe nach einer gewissen Gebrauchsdauer infolge von Abnutzung den Anforderungen nicht mehr gerecht, so gelangt Flüssigkeit in die axiale Bohrung 62. Es wird damit in einfacher Weise eine Lecküberwachung ermöglicht. In entsprechender Weise mündet in die Ringnut 58 mit dem Dichtring 38 auf der druckabgewandten Seite eine radiale Bohrung 68, welche wiederum mit einer kleinen Schraube 70 und einem Dichtring 72 abgeschlossen ist bzw. zur Lecküberwachung geöffnet werden kann.

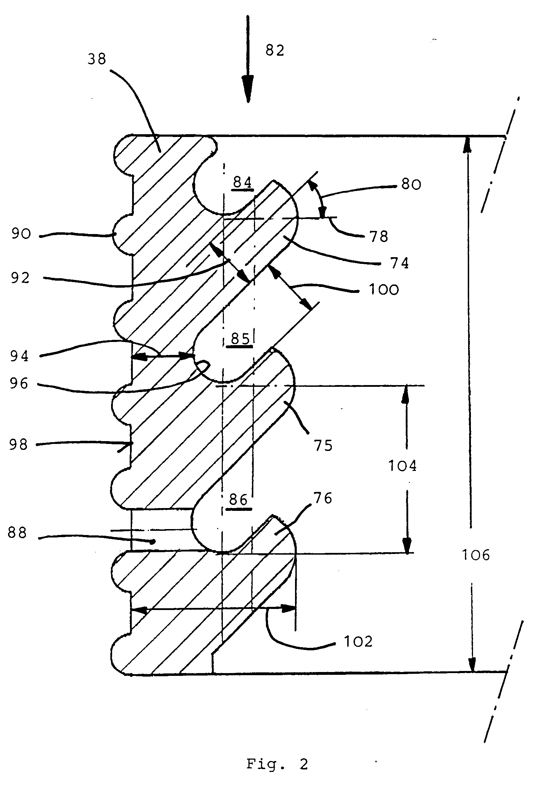

In Fig. 2 ist stark vergrößert der Dichtring 38 dargestellt, und zwar der gemäß Fig. 1 linke Teil nahe der Schraube zur Lecküberwachung. Der Dichtring 38 enthält drei an der Außenfläche des Kolbens unter elastischer Vorspannung anliegende Dichtlippen 74 bis 76. Diese Dichtlippen sind bezüglich der Radialebene 78 um einen Winkel 80 in Richtung zur Kammer bzw. Druckseite geneigt. Der von der Kammer in Richtung des Pfeiles 82 einwirkende Druck bewirkt ein verstärktes Anpressen der nächstliegenden Dichtlippe 74 an die Außenfläche des Kolbens. Die Dichtlippen 75 und 76 werden im Anfangsstadium nach dem Einbau bei Bewegungen des Kolbens nur minimal beansprucht und unterliegen damit praktisch keinem Verschleiß. Der Winkel 80 liegt zweckmäßig in der Größenordnung von 45°. Bezogen auf die Druckseite sind vor den Dichtlippen 74 bis 76 Ringkammern 84 bis 86 vorhanden, wobei Flüssigkeit zunächst nur in die erste Kammer 84 gelangen kann und der dort wirksame Druck die Dichtlippe 74 verstärkt an die Außenwand des Kolbens andrückt. Läßt nach geraumer Zeit die Dichtwirkung infolge Verschleiß nach, so gelangt Flüssigkeit auch in die nächste Kammer 85, sodaß nunmehr die zweite Dichtlippe 75 die Abdichtung nach außen gewährleistet. In die dritte Ringkammer 86 mündet wenigstens ein radialer Durchbruch 88, welcher mit der in Figur 1 dargestellten Bohrung 68 der Hülse 6 in Verbindung steht. Aus Sicherheitsgründen sind zweckmäßig wenigstens zwei, bevorzugt vier derartige Durchbrechungen über den Umfang verteilt angeordnet. Wird nach weiterer Betriebszeit die Abdichtung mit der zweiten Dichtlippe 75 nicht mehr gewährleistet, so gelangt Flüssigkeit in die dritte Ringkammer 86, wobei nunmehr die Abdichtung nach außen mittels der dritten Dichtlippe 76 erfolgt. Wird die vorstehend erwähnte Schraube zur Lecküberwachung geöffnet, so kann die in der Ringkammer 86 angesammelte Flüssigkeit entweichen und das Bedienungspersonal weiß nunmehr, daß bei der nächsten Gelegenheit der Kompensator ausgetauscht werden muß. Aufgrund dieser besonderen Ausgestaltung auch der beiden anderen Dichtringe und der damit erreichten Lecküberwachung wird für eine lange Lebensdauer ein funktionssicherer Betrieb des Kompensators insgesamt gewährleistet.

Der Dichtring 38 weist auf der dem Boden der Ringnut zugewandten Seite eine Anzahl, hier sieben, ringförmige Wulste 90 auf, welche eine zuverlässige Anlage sowie einen Ausgleich von Fertigungstoleranzen der Ringnut ermöglichen und zudem eine Materialersparnis ergeben. Die senkrecht zur Neigungsrichtung gemessene Breite 92 der Dichtlippen ist im wesentlichen gleich groß wie die Dicke 94 des Dichtringes zwischen dem Boden 96 und der Außenfläche 98. Der zwischen den Dichtlippen gleichfalls orthogonal zur Neigungsrichtung gemessene Abstand 100 und damit die Breite der Ringkammer ist gleichfalls im wesentlichen gleich groß wie die Breite 92 und/oder die Dicke 94. Schließlich ist die radiale Gesamtdicke 102 zwischen der Außenfläche 98 und der Innenkante der unbelasteten Dichtlippe im wesentlichen gleich groß wie der axiale Abstand 104 benachbarter Dichtlippen. Die axiale Gesamtlänge 106 des Dichtringes ist im wesentlichen um einen Faktor entsprechend der der Dichtlippen größer als der Abstand 104 zwischen zwei benachbarten Dichtlippen. Der Abstand 104 ist um einen Faktor zwischen 2 und 3 größer als die Breite 92 und/oder die Dicke 94. Die Gesamtdicke 102 ist sehr klein, so daß auch die Spritzgießteile, nämlich Flansch 26, der Ansatz 32 sowie der Kolben 4 und der Kern 2 kleine Wanddicken im Bereich des jeweiligen Dichtringes aufweisen können.

Der anhand von Fig. 1 dargestellte Dichtring 37 des Kolbens 4 ist im wesentlichen übereinstimmend mit dem vorstehend erläuterten Dichtring 38 der Hülse 6 ausgebildet. Abgesehen von der Tatsache, daß bei dem Dichtring 36 des Kolbens 4 die Dichtlippen radial nach außen gerichtet sind, weist auch der Dichtring 36 im übrigen den gleichen Aufbau und die Funktionsweise wie der vorstehend erläuterte Dichtring 38 auf. Die radialen Durchbrechungen der Dichtringe 36, 37 liegen im wesentlichen in der gleichen Radialebene wie die radiale Durchgangsbohrung 60 zwischen den beiden Kammern. Durch die Zwischenräume zwischen den auf der Innenfläche des Dichtringes 36 bzw. auf der Außenfläche des Dichtringes 37 vorhandenen Wülsten kann somit im Falle einer zu hohen Leckrate im Bereich der jeweils zweiten Dichtlippe Flüssigkeit über die radiale Bohrung 60 in die axiale Bohrung 62 des Kolbens 4 gelangen, so daß bei einem Öffnen der Rändelschraube 64 Flüssigkeit heraustritt.

### Bezugszeichen

- 2: Kern
- 4: Kolben
- 6: Hülse
- 8: Ringkammer zwischen 2 und 6
- 10: Längsachse
- 12, 14: Muffe
- 13, 15: Rohr
- 16: Mantel
- 17, 19: Ringbund
- 18: Ringschulter
- 20: Ring von 2
- 22: Steg
- 24: Entlüftungsbohrung
- 26: Flansch
- 28: Außenfläche von 2
- 30: Innenfläche von 6
- 32: Ansatz von 6
- 34: Außenfläche von 4
- 36 - 38: Dichtring
- 40: Kammer
- 42: Innenraum
- 44: Bohrung
- 46, 47: Verbindungsnut
- 48: Rückwand von 26
- 49: Abstandselement
- 50: Querschnittsfläche
- 51: Stirnwand
- 52: Pfeil
- 53: Endplatte
- 54: Boden
- 55: Balg
- 56 - 58: Ringnut
- 60: radiale Bohrung
- 62: axiale Bohrung
- 64: Schraube
- 66: Dichtring
- 68: Bohrung in 6
- 70: Schraube
- 72: Dichtring
- 74 - 76: Dichtlippe
- 78: Radialebne
- 84 - 86: Ringkammer
- 88: Durchbrechung
- 90: Wulst
- 92: Breite
- 94: Dicke
- 96: Boden
- 98: Außenfläche
- 100: Abstand
- 102: Gesamtdicke
- 104: axialer Abstand
- 106: axiale Gesamtlänge

## Patentansprüche

1. Kompensator zur Aufnahme von Längenänderungen in einer Rohrleitung, welche Rohre (13, 15) aus Kunststoff enthält und unter Druck stehende Flüssigkeiten führt, mit einem Kern (2) und einem Kolben (4), welche aus Kunststoff bestehen und welche jeweils mit einem der Rohre (13, 15) verbunden und in axialer Richtung relativ zueinander bewegbar sind, mit einer zwischen dem Kern (2) und einer mit diesem verbundenen und aus Kunststoff bestehenden Hülse (6) vorhandenen Ringkammer (8), in welcher der Kolben (4) zumindest teilweise axial bewegbar ist, wobei zwischen dem Kolben (4) und der Hülse (6) eine vom Druck der Rohrleitung beaufschlagbare Kammer (40) vorhanden ist und wobei Anschlußelemente für die Rohre (13, 15) in den Kern (2) sowie den Kolben (4) integriert und insbesondere als Muffen (12, 14) ausgebildet sind,
dadurch gekennzeichnet, daß die Hülse (6) außen von einem Mantel (16) aus Metall umgeben ist.

2. Kompensator nach Anspruch 1, dadurch gekennzeichnet, daß die Hülse (6) einen radial nach Innen gerichteten Ansatz (32) mit einem Dichtring (38) aufweist, welcher an einer Außenfläche (34) des Kolbens (4) dichtend anliegt, wobei in axialer Richtung zwischen dem Ansatz (32) und einer Rückwand (48) eines Flansches (26) des Kolbens (4) die Kammer (40) augeordnet ist.

3. Kompensator nach Anspruch 2, dadurch gekennzeichnet, daß die Fläche der Rückwand (48) im wesentlichen gleich groß, bevorzugt und die Reibkräfte von Dichtringen (36 bis 38) größer als eine freie Querschnittsfläche (50) des Kolbens (4) ist, wobei die genannte Querschnittsfläche (50) von der den Kern (2) umgebenden Innenfläche des Kolbens (4) gebildet ist.

4. Kompensator nach einem der Ansprüche 1 bis 3, dadurch gekennzeichnet, daß der Kolben (4) auf seiner Innenfläche wenigstens eine Verbindungsnut (46, 47) aufweist, welche bevorzugt über eine insbesondere radiale Bohrung (44) in die Kammer (40) mündet, und/oder daß die Bohrung (44) im wesentlichen im Bereich der Rückwand (48) des Flansches (26) angeordnet ist.

5. Kompensator nach einem der Ansprüche 1 bis 4, dadurch gekennzeichnet, daß die insbesondere als Muffen (12, 14) ausgebildeten Anschlußelemente im Inneren des Kerns (2) und/oder des Kolbens (4) Ringbunde (17, 19) aufweisen und/oder daß die radiale Dicke der Ringbunde (17, 19) im wesentlichen gleich groß wie die Wanddicke der Rohre (13, 15) ist.

6. Kompensator nach einem der Ansprüche 1 bis 5, dadurch gekennzeichnet, daß die Hülse (6) an ihrem einen axialen Ende den Ansatz (32) aufweist, welcher bevorzugt an einem Boden (54) des Mantels (16) anliegt und/oder daß die Hülse (6) am anderen Ende eine Ringschulter (18) zur definierten Ausrichtung und Festlegung, insbesondere durch Verkleben, des Kernes (2) aufweist.

7. Kompensator nach einem der Ansprüche 1 bis 6, dadurch gekennzeichnet, daß der Kern (2) insbesondere im Bereich einer Muffe (12) für die Rohrleitung einen radialen Steg (22) und/oder einen Ring (20) aufweist, über welchen die Verbindung und/oder Festlegung mit der Hülse (6) erfolgt.

8. Kompensator nach einem der Ansprüche 1 bis 7, dadurch gekennzeichnet, daß zur Abdichtung der Kammer (40) Dichtringe (36 bis 38) insbesondere in Ringnuten (56 bis 58) des Kolbens (4) und/oder der Hülse (6) angeordnet sind, und/oder daß diese Dichtringe (36 bis 38) wenigstens eine in Druckrichtung hinter einer Dichtlippe (74) liegende Ringkammer (86) aufweisen, welche über wenigstens eine Durchbrechung (88) und/ oder Bohrung (60, 62, 68) eine Lecküberwachung ermöglichen.

9. Kompensator nach Anspruch 8, dadurch gekennzeichnet, daß der Dichtring (38) in Druckrichtung hinter der genannten Ringkammer (86) eine weitere Dichtlippe (76) aufweist und/oder daß der Dichtring (38) in Druckrichtung vor der Ringkammer (86) wenigstens zwei Dichtlippen (74, 75) aufweist und/oder daß die Dichtringe (36 bis 38) wenigsten eine Durchbrechung (88) enthalten, welche einerseits mit der Ringkammer (86) und andererseits mit einer von außen verschließbaren Ausnehmung oder Bohrung (60, 62, 68) des Kolbens (4) bzw. der Hülse (6) in Verbindung steht.

10. Kompensator nach einem der Ansprüche 1 bis 9, dadurch gekennzeichnet, daß die wengistens zwei, bevorzugt drei, Dichtlippen (74 bis 76) bezüglich der Radialebene (78) zu der Seite, auf welcher der Druck einwirkt, in einem Winkel (80) geneigt sind, wobei dieser Winkel zweckmäßig zwischen 40° bis 50°, bevorzugt im wesentlichen 45°, groß ist.

11. Kompensator nach einem der Ansprüche 1 bis 10, dadurch gekennzeichnet, daß die orthogonal zur Neigungsrichtung der jeweiligen Dichtlippe (74 bis 76) gemessene Breite (92) im wesentlichen gleich groß ist wie der gleichfalls orthogonal zur Neigungsrichtung gemessene Abstand (100) benachbarter Dichtlippen.

12. Kompensator nach einem der Ansprüche 1 bis 11, dadurch gekennzeichnet, daß die radiale Dicke (94) des Dichtringes im wesentlichen gleich groß ist wie die genannte Breite (92) und/oder der Abstand (100) der Dichtlippen (74 bis 76) und/oder daß die radiale Gesamtdicke (102) zwischen der Außenfläche (98) und der Spitze der Dichtlippe im unbelasteten Zustand um einen Faktor zwischen 2 und 3 größer ist als die radiale Breite (94).

## Claims

1. Compensator for taking up alterations in length in a pipe run which comprises pipes (13, 15) made from plastics materials and carries fluids under pressure, with a core (2) and a piston (4) which are made from plastics material and which are each connected to one of the pipes (13, 15) and are movable in the axial direction relative to one another, with an annular chamber (8) between the cores (2) and a sleeve (6) connected to the latter and made from plastics material, the piston (4) being at least partially axially movable in the said annular chamber, wherein a chamber (40) which can be acted upon by the pressure of the pipe run is provided between the piston (4) and the sleeve (6), and wherein connecting elements for the pipes (13, 15) are integrated into the core (2) and the piston (4) and are constructed in particular as bushes (12, 14), characterised in that the sleeve (6) is surrounded externally by a casing (16) made from metal,

2. Compensator according to Claim 1, characterised in that the sleeve (6) has a projection (32) directed radially inwards with a sealing ring (38) which bears against an outer surface (34) of the piston (4) so as to form a seal, the chamber (4) being disposed in the axial direction between the projection (32) and a rear wall (48) of a flange (26) of the piston (4).

3. Compensator according to Claim 2, characterised in that the surface of the rear wall (48) is substantially equal in size to, preferably greater by the frictional forces of sealing rings (36 to 38) than a free cross-sectional surface (50) of the piston (4), the said cross-sectional surface (50) being formed by the inner surface of the piston (4) surrounding the core (2).

4. Compensator according to one of Claims 1 to 3, characterised in that the piston (4) has on its inner surface at least one connecting groove (46, 47) which preferably opens by way of a particularly radial bore (44) into the chamber (40), and/or that the bore (44) is disposed substantially in the region of the rear wall (48) of the flange (26).

5. Compensator according to one of Claims 1 to 4, characterised in that the connecting elements which are particularly constructed as bushes (12, 14) in the interior of the core (2) and/or of the piston (4) have collars (17, 19), and/or that the radial thickness of the collars (17, 19) is substantially equal to the wall thickness of the pipes (13, 15).

6. Compensator according to one of Claims 1 to 5, characterised in that the sleeve (6) has at one axial end thereof the projection (32) which preferably bears against a base (54) of the casing (16), and/or that the sleeve (6) has on the other end an annular shoulder (18) for defined alignment and fixing, particularly by glueing, of the core (2).

7. Compensator according to one of Claims 1 to 6, characterised in that the core (2) has particularly in the region of one bush (12) for the pipe run a radial web (22) and/or a ring (20) by which it is connected and/or fixed to the sleeve (6).

8. Compensator according to one of Claims 1 to 8, characterised in that for sealing of the chamber (40) sealing rings (36 to 38) are disposed particularly in annular grooves (56 to 58) in the piston (4) and/or in the sleeve (6), and/or that these sealing rings (36 to 38) have at least one annular chamber (86) which lies behind a sealing lip (74) in the direction of pressure and which makes it possible to check for leaks by way of at least one opening (88) and/or bore (60, 62, 68).

9. Compensator according to Claim 8, characterised in that the sealing ring (38) has a further sealing lip (76) behind the said annular chamber (86) in the direction of pressure, and/or that the sealing ring (38) has at least two sealing lips (74, 75) before the annular chamber (86) in the direction of pressure, and/or that the sealing rings (36 to 38) contain at least one opening (88) which communicates on the one hand with the annular chamber (86) and on the other hand with an opening or bore (60, 62, 68) in the piston (4) or the sleeve (6) which can be closed from the exterior.

10. Compensator according to one of Claims 1 to 9, characterised in that the sealing lips (74 to 76), of which there are at least two, preferably three, are inclined at an angle (8) with respect to the radial plane (78) towards the side on which the pressure acts, the said angle being advantageously between 40° and 50°, preferably substantially 45°.

11. Compensator according to one of Claims 1 to 10, characterised in that the width (92) measured orthogonally with respect to the direction of inclination of the sealing lip in question (74 to 76) is substantially equal to the distance (100) between adjacent sealing lips, also measured orthogonally with respect to the direction of inclination.

12. Compensator according to one of Claims 1 to 11, characterised in that the radial thickness (94) of the sealing ring is substantially equal to the said width and/or the distance (100) between the sealing lips (74 to 76), and/or that the radial overall thickness (102) between the outer surface (98) and the tip of the sealing lip in the unloaded state is greater than the radial width by a factor of between 2 and 3.

## Revendications

1. Compensateur destiné à absorber des variations de longueur dans une canalisation, qui comprend des tuyaux (13, 15) en matière plastique et qui conduit des liquides sous pression, comprenant un noyau (2) et un piston (4) qui sont fait de matière plastique et sont raccordés chacun à l'un des tuyaux (13, 15) et peuvent se déplacer l'un par rapport à l'autre dans la direction axiale, une chambre annulaire (8) située entre le noyau (2) et une douille (6) réunie à ce noyau et faite de matière plastique, chambre dans laquelle le piston (4) peut se déplacer axialement, au moins sur une longueur partielle, une chambre (40) pouvant être chargée par la pression de la canalisation étant ménagée entre le piston (4) et la douille (6) et des éléments de raccordement pour les tuyaux (15) étant intégrés dans le noyau (2) et dans le piston (4) et constitué en particulier par des manchons (12, 14),
***caractérisé en ce que*** la douille (6) est entourée extérieurement d'une gaine (16) en métal.

2. Compensateur selon la Revendication 1, ***caractérisé en ce que*** la douille (6) présente une saillie (32) dirigée radialement vers l'intérieur et munie d'une bague d'étanchéité (38) qui s'appuie à joint étanche contre une surface extérieure (34) du piston (4), la chambre (40) étant située dans la direction axiale entre la saillie (32) et une paroi arrière (48) d'une collerette (26) du piston (4).

3. Compensateur selon la Revendication 2, ***caractérisé en ce que*** l'aire de la paroi arrière (48) est sensiblement égale à l'aire de section libre (50) du piston (4), ou, de préférence, supérieure à cette aire dans une mesure qui correspond aux forces de frottement des bagues d'étanchéité (36 à 38), l'aire de section (50) citée étant formée par l'aire interne du piston (4) qui entoure le noyau (2).

4. Compensateur selon l'une des Revendications 1 à 3, ***caractérisé en ce que*** le piston (4) présente sur sa surface interne au moins une rainure de communication (46, 47) qui débouche de préférence dans la chambre (40), par l'intermédiaire d'un perçage (44), notamment radial, et/ou ***en ce que*** le perçage (44) est prévu sensiblement dans la région de la paroi arrière (48) de la collerette (26).

5. Compensateur selon l'une des Revendications 1 à 4, ***caractérisé en ce que*** les éléments de raccordement, notamment formés de manchons (12, 14) présentent des embases annulaires (17, 19) à l'intérieur du noyau (2) et/ou du piston (4) et/ou ***en ce que*** l'épaisseur radiale des embases annulaires (17, 19) est sensiblement égale à l'épaisseur de paroi des tuyaux (13, 15).

6. Compensateur selon l'une des Revendications 1 à 5, ***caractérisé en ce que*** la douille (6) présente la saillie (32) à l'une de ses extrémités axiales, cette saillie étant de préférence appuyée contre un fond (54) de la gaine (16) et/ou en ce que la douille (6) présente, à l'autre extrémité, un épaulement annulaire (18) servant à assurer l'alignement défini et la fixation, notamment par collage, du noyau (2).

7. Compensateur selon une des Revendications 1 à 6, ***caractérisé en ce que*** le noyau (2) présente, notamment dans la région d'un manchon (12) recevant la canalisation, un voile radial (22) et/ou une bague (20) par l'intermédiaire desquels s'effectue le raccordement et/ou la fixation à la douille (6).

8. Compensateur selon l'une des Revendications 1 à 7, ***caractérisé en ce que***, pour l'étanchéité de la chambre (40), des bagues d'étanchéité (36 à 38) sont prévues, en particulier dans des gorges annulaires (56 à 58) du piston (4) et/ou de la douille (6) et/ou ***en ce que*** ces bagues d'étanchéité (36 à 38) présentent au moins une chambre annulaire (86) située en aval d'une lèvre d'étanchéité (74) dans le sens de la pression, cette chambre ou ces chambres permettant de réaliser une surveillance des fuites par l'intermédiaire d'au moins une percée (88) et/ou d'un perçage (60, 62, 68).

9. Compensateur selon la revendication 8, ***caractérisé en ce que*** la bague d'étanchéité présente une autre lèvre d'étanchéité (76) en aval de la chambre annulaire (86) précitée, dans le sens de la pression et/ou ***en ce que*** la bague d'étanchéité (38) présente au moins deux lèvres d'étanchéité (74, 75) en amont de la chambre annulaire (86) dans le sens de la pression et/ou en ce que les bagues d'étanchéité (36 à 38) comprennent au moins une percée (88) qui est en communication, d'une part avec la chambre annulaire (86) et, d'autre part, avec un évidement ou perçage (60, 62, 68) du piston (4) ou de la douille (6) respectivement, qui peut être obturé de l'extérieur.

10. Compensateur selon l'une des Revendications 1 à 9, ***caractérisé en ce que*** les au moins deux, de préférence trois, lèvres d'étanchéité (74 76) sont inclinées d'un angle (80) sur le plan radial (78) vers le côté sur lequel la pression agit, cet angle étant avantageusement d'entrée 40⁻ et 50⁻, de préférence sensiblement égal à 45°.

11. Compensateur selon l'une des Revendications 1 à 10, ***caractérisé en ce que*** la largeur (92) mesurée perpendiculairement à la direction d'inclinaison de chaque lèvre d'étanchéité (74 à 76) est sensiblement égale à la distance (100), elle aussi mesurée perpendiculairement à la direction d'inclinaison, entre les lèvres d'étanchéité adjacentes.

12. Compensateur selon l'une des Revendications 1 à 11, ***caractérisé en ce que*** l'épaisseur radiale (94) de la bague d'étanchéité est sensiblement égale à la largeur précitée (92) et/ou à la distance (100) entre les lèvres d'étanchéité (74 à 76) et/ou ***en ce que*** l'épaisseur totale radiale (102) mesurée entre la surface externe (98) et la pointe de la lèvre d'étanchéité à l'état déchargé est supérieure à la largeur radiale (94) d'un facteur d'entre 2 et 3.
